# EUROPÄISCHE PATENTSCHRIFT

(11) **EP 3 727 969 B1**
(45) Veröffentlichungstag und Bekanntmachung des Hinweises auf die Patenterteilung: **16.03.2022**
(21) Anmeldenummer: 18789648.5
(22) Anmeldetag: 19.10.2018
(51) Int. Cl.: B60T 11/16

(54) **AGGREGAT MIT WENIGSTENS EINEM KOLBEN MIT EINER ZUGEORDNETEN KOLBENFEDER**
UNIT HAVING AT LEAST ONE PISTON WITH AN ASSOCIATED PISTON SPRING
ENSEMBLE COMPORTANT AU MOINS UN PISTON AUQUEL EST ASSOCIÉ UN RESSORT DE PISTON

(30) Priorität: 22.12.2017 DE 102017223678
(43) Veröffentlichungstag der Anmeldung: 28.10.2020
(73) Patentinhaber: Continental Teves AG & Co. OHG, 60488 Frankfurt am Main (DE)
(72) Erfinder: BISCHOFF, Andreas, 60437 Frankfurt am Main (DE); KRÄMER, Horst, 65462 Ginsheim-Gustavsburg (DE); RÜFFER, Manfred, 65843 Sulzbach (DE); LOKE, Jörg, 65611 Brechen (DE); GERBER, Sascha, 65307 Bad Schwalbach (DE); KNEWITZ, Ingo, 61267 Neu Anspach (DE)
(74) Vertreter: Continental Corporation
(86) Internationale Anmeldenummer: PCT/EP2018/078718
(87) Internationale Veröffentlichungsnummer: WO 2019/120687

(56) Entgegenhaltungen:
- CN-B- 103 089 866
- CN-U- 203 272 548
- DE-A1-102015 119 434
- GB-A- 2 486 051

## Beschreibung

Die Erfindung bezieht sich auf ein Aggregat mit den Merkmalen nach dem Oberbegriff des Anspruch 1, insbesondere einen Hauptbremszylinder für eine hydraulische Kraftfahrzeugbremsanlage.

Derartige Aggregate mit in einer Bohrung axial versetzbaren Kolben, welchem eine Kolbenfeder, insbesondere eine Rückstellfeder zugeordnet ist, sind in vielfältigen Ausgestaltungen bekannt und verbreitet.

Für eine vereinfachte und sichere Zusammenbau des Aggregats ist man bestrebt, gesonderte Montageeinheiten beziehungsweise Montagebaugruppen zu bilden, welche jeweils die Kolbenfeder mit dem zugeordneten Kolben umfassen und die Schnittstelle zwischen der Kolbenfeder und Kolben verliersicher gefesselt zu gestalten.

DE 10 2015 119 434 A1 offenbart eine Haltevorrichtung, ein Montagesystem und ein Verfahren zum Halten von Bauteilen während der Montage.

Beispielsweise aus DE 10 2012 222 547 ist ein Tandem - Hauptbremszylinder mit einem Aluminiumgehäuse für eine Kraftfahrzeugbremsanlege bekannt, bei dem die Kolbenfeder am Primärkolben über eine verschiebbare sowie mittels einer Vernietung an einem Dorn am Kolben verliergesicherte Hülse an den Kolben gefesselt ist. Bei dem Sekundärkolben ist die Kolbenfeder mit ihren Innendurchmesser am kolbenseitigen Ende über eine Übermaßpassung an einem mittigen Pin am Kolben permanent geklemmt. Die Fesselung der Kolbenfeder an den zugeordneten Kolben bleibt auch im Betrieb des Aggregats bestehen.

Als nachteilig wird dabei angesehen, dass derartige Lösungen stets eine genaue Aneinanderanpassung der Paarung Kolbenfeder/Kolben für unterschiedliche Varianten der Bauteile erfordern und dadurch die erforderliche Teilevielfalt erhöhen. Der Aufwand für die Vormontage der Montageeinheit und Anforderungen an die Maßhaltigkeit der Kolbenfeder/Kolben-Schnittstelle sind erhöht. Es bestehen Gefahren von nur aufwändig behebbaren Fehlmontagen der Kolbenfeder bei der Vormontage und von Bildung von Spänen durch das Aufpressen der Kolbenfeder oder durch das Vernieten.

Die Erfindung beruht somit auf der Aufgabe, ein verbessertes Aggregat und ein Verfahren anzubieten, mit dem der Kolben und die Kolbenfeder effektiver und unter Vermeidung der vorgenannten Nachteile in dem Aggregat montiert werden können und Anforderungen an die Vormontage, Schnittstellenmaßhaltigkeit sowie die Teilevielfalt bei Variantenbildung möglichst reduziert werden könnten.

Die Aufgabe wird erfindungsgemäß durch ein Aggregat mit der Merkmalskombination nach dem Anspruch 8 und das Montageverfahren nach Anspruch 1 gelöst. Unteransprüche zusammen mit Figurenbeschreibungen geben weitere vorteilhafte Ausführungen und Weiterbildungen der Erfindung an.

Die Erfindung sieht vor, dass zur Montage des Kolbens mit der Kolbenfeder in das Aggregat eine Montageeinheit vorgesehen ist, welche den Kolben und die Kolbenfeder umfasst. Es ist vorgesehen, dass die Kolbenfeder aus einem magnetischen oder magnetisierbaren Werkstoff, insbesondere einem ferromagnetischen Werkstoff wie Federstahl ausgebildet ist und der Kolben aus einem nichtmagnetischen Werkstoff wie Kunststoff oder Leichtmetall. Die Kolbenfeder kann somit in der Montageeinheit durch ein Magnetfeld an dem Kolben gehalten wird.

Eine Vormontage entfällt gänzlich oder kann zumindest signifikant reduziert werden. Durch Entfall des Aufpressens oder Vernietung ist eine Spanbildung ausgeschlossen.

Nach der erfindungsgemäßen Weiterbildung kann das Magnetfeld von einem Magnetelement erzeugt werden, welches in einem, nach dem Einbringen der Montageeinheit zu entfernenden Montagewerkzeug angeordnet ist, so dass der Kolben bei Montage zwischen dem Magnetelement und der Kolbenfeder positioniert und eingeklemmt ist.

Dadurch entfällt die Notwendigkeit einer genauen Anpassung sowie dauerhaften Fesselung der Kolbenfeder an den Kolben. Die Montageeinheit wird nur temporär während des Montagevorgangs zusammengehalten.

Gemäß der bevorzugten Ausführungsform ist der Kolben im Wesentlichen hülsenförmig mit einem Boden und einer rohrförmigen Wandung gestaltet, wobei eine Innenseite der Wandung und eine Innenseite des Bodens in dem Kolben einen Kolbeninnenraum begrenzen und die Kolbenfeder zumindest bereichsweise in dem Kolbeninnenraum angeordnet ist.

Hierdurch ist eine sichere Führung und Festlegung der Kolbenfeder mit einem vergleichsweise geringen Magnetfeld und reduzierter Magnetelementgröße gewährleistet.

Zur der weiteren Verbesserung einer sicheren Kolbenfederanbindung kann das Magnetelement bevorzugt zur Montage im Bereich der Außenseite des Bodens positioniert sein, so dass die Kolbenfeder durch das Magnetfeld gegen die Innenseite des Bodens gepresst ist. Damit kann zudem die Kolben/Montagewerkzeug-Schnittstelle signifikant vereinfacht werden.

Gemäß der bevorzugten Ausführungsform ist die Kolbenfeder funktionsgünstig koaxial zu dem Kolben angeordnet.

Für eine einfache zwangsweise Zentrierung der Kolbenfeder zu dem Kolben kann an der Innenseite des Bodens ein in den Kolbeninnenraum vorgestreckter Ansatz mit einem zumindest bereichsweise konischen Außenkonturabschnitt angeordnet werden.

Zur effektiven Vermeidung von Verklemmen oder Verkanten der Kolbenfeder in Bezug zum Kolben, kann die Kolbenfeder zu dem Ansatz sowie gegenüber der Wandung des Kolbens eine lose Spielpassung aufweisen.

Dadurch sinken zudem die Anforderungen an die Maßhaltigkeit, eine Kolbenfeder kann mit Vorteil für Standardisierung beispielsweise mit mehreren Kolbenvarianten gepaart werden und vice versa. Teilevielfalt beziehungsweise Teileumfang werden kosteneffizient reduziert.

Gemäß einer erfindungsgemäßen Ausführungsform kann das Magnetelement als ein Permanentmagnet ausgebildet sein, wodurch das Montagewerkzeug besonders einfach sowie stromunabhängig konstruiert werden kann.

Gemäß einer anderen erfindungsgemäßen Ausführungsform das Magnetelement auch als ein Elektromagnet ausgebildet sein, dessen Magnetfeld bei einem aktivierten Zustand des Magnetelements vorhanden ist und bei einem deaktivierten Zustand des Magnetelements nicht oder nicht ausreichenden vorhanden ist. Damit kann der Montageprozess besonders einfach gestaltet werden, weil das Aneinanderhaften und das Voneinanderlösen der Montageeinheit und des Montagewerkzeug sicher und effektiv durch eine einfache Ansteuerung des Elektromagneten realisierbar ist.

Besonders effektiv werden die Vorteile der Erfindung ausgenutzt, wenn das Aggregat als ein Hauptbremszylinder einer Kraftfahrzeugbremsanlage, bevorzugt in Tandembauweise mit zwei koaxial hintereinander angeordneten Kolben mit zugeordneten Kolbenfedern ausgebildet ist.

Die Erfindung beansprucht ebenso ein zugehöriges, effektiv vereinfachtes Montagewerkzeug zur Montage der erfindungsgemäßen Montageeinheit, welches eine Schnittstelle zum berührenden Anbinden des Kolbens und wenigstens ein Magnetelement im Bereich der Schnittstelle aufweist. Die Notwenigkeit eines Festhaltens des Kolbens mittels aufwändigen mechanischen oder pneumatischen Vorrichtungen kann entfallen oder zumindest signifikant vereinfacht werden.

Des Weiteren beansprucht die Erfindung ein vorteilhaftes Montageverfahren zur Montage des Kolbens mit der zugehörigen Kolbenfeder welches folgende Prozessschritte umfasst:
Das Bilden einer Montageeinheit, indem der Kolben zusammen mit einer räumlich zu diesem ausgerichteten Kolbenfeder in ein Magnetfeld des Montagewerkzeugs an eine vorgesehene Kolben/Montagewerkzeug-Schnittstelle gebracht wird, das Einführen der Montageeinheit in den Hohlraum im Gehäuse des Aggregats und das Trennen des Montagewerkzeugs von dem Kolben. Mit dem vorteilhaften Montageverfahren kann die aufwändige Vormontage entfallen, der Gesamtaufwand für den Aggregatzusammenbau dadurch reduziert und die Montageanlagen signifikant vereinfacht sowie standardisiert werden. Ebenso wird mit dem erfindungsgemäßen Montageverfahren ein hoher Automatisierungsgrad begünstigt.

Weitere Merkmale und Vorteile der Erfindung ergeben sich aus der nachfolgenden Beschreibung eines Ausführungsbeispiels und den Zeichnungen. Hierbei zeigt:
Fig.1 teilweise stark vereinfacht eine erste erfindungsgemäße Ausführungsform im Axialschnitt und das Montagewerkzeug mit einem Permanentmagneten.
Fig.2 eine andere erfindungsgemäße Ausführungsform einer Montageeinheit und eine Ausführungsform des Montagewerkzeugs mit einem Elektromagneten.
Fig.3 Stark vereinfachte Darstellung eines Hauptbremszylinders in Tandembauweise, umfassend zwei erfindungsgemäße Montageeinheiten.

### Fig.1

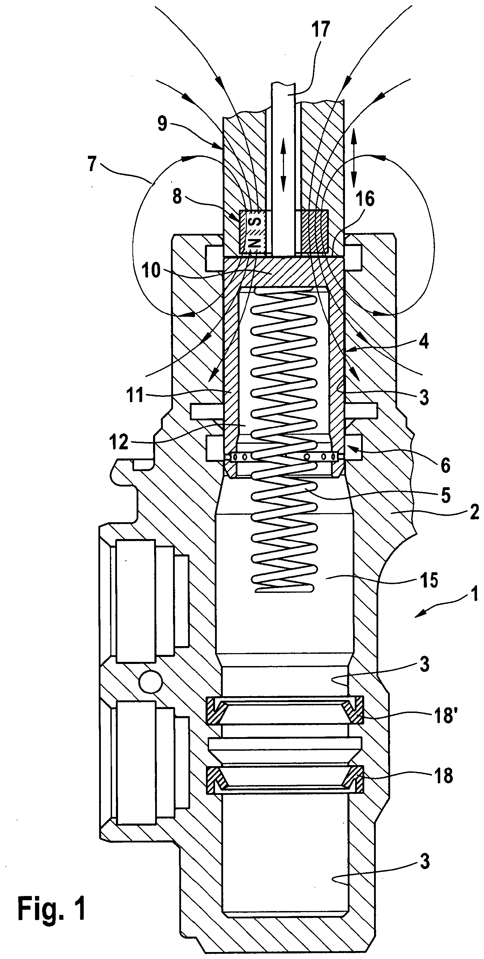

Fig.1 zeigt in Schnittdarstellung ein noch unvollständig aufgebautes erfindungsgemäßes Aggregat 1 mit einer ersten Ausführungsform einer Montageeinheit 6 und dem Montagewerkzeug 9, beim Einführen in den Hohlraum 15 des Gehäuses 2.

Das Aggregat 1 ist in der gezeigten Ausführungsform beispielhaft als ein Hauptbremszylinder in Tandembauweise für eine hydraulische Kraftfahrzeugbremsanlage ausgebildet.

Das Aggregat 1 umfasst ein Gehäuse 2 aus einer nichtmagnetischen Aluminiumlegierung. In dem Gehäuse 2 ist ein sackförmiger Hohlraum 15 vorgesehen, der bereichsweise zur Führung des Kolbens 4 als eine Bohrung 3 gestaltet ist. In gesonderten Nuten der Bohrung 3 angeordneten Dichtelemente 18,18' sind zum dichtenden Abgleiten an der radialen Außenfläche des Kolbens 4 vorgesehen.

Der Kolben 4 besteht im Wesentlichen, aus einem nichtmagnetischen Werkstoff. Innerhalb der Erfindung können hierfür insbesondere Kunststoffe, jedoch ebenso Leichtmetalle und Leichtmetalllegierungen verwendet werden.

Der Kolben 4 ist im Wesentlichen hülsenförmig gestaltet und verfügt über einen Boden 10 und eine rohrförmige Wandung 11.

Die Innenseiten der Wandung 11 und des Bodens 10 begrenzen somit in dem Kolben 4 einen Kolbeninnenraum 12 in dem eine Kolbenfeder 5 bereichsweise sowie lose nicht verklemmt aufgenommen ist. Die Kolbenfeder 5 dient als eine Rückstellfeder. Sie stützt sich axial gegen die Innenseite des Bodens 10, wird bei einer Betätigung des Kolbens 4 komprimiert und versetzt den Kolben 4 in seine unbetätigte Ausgangslage am Ende des Betätigungsvorgangs.

Die Kolbenfeder 5 wird innerhalb der Erfindung aus einem magnetischen oder einem magnetisierbaren Werkstoff, insbesondere einem ferromagnetischen Werkstoff wie Federstahl hergestellt, reagiert somit auf Magnetfelder.

Für eine vereinfachte Montage ist die Kolbenfeder 5 zusammen mit dem Kolben 4 zu einer Montageeinheit 6 zusammengefasst. Ein Montagewerkzeug 9 dient zum Festhalten und Einführen der Montageeinheit 6 in den Hohlraum 15. Hierfür ist in dem Montagewerkzeug 9 ein Magnetelement 8 angeordnet, welches ein Magnetfeld 7 erzeugt.

Der Kolben 5 ist mit der Außenseite seines Bodens 10 an eine Schnittstelle 16 am Montagewerkzeug 9 angelegt. Das Magnetelement 8 befindet sich in der unmittelbaren Nähe des Bodens 10 des Kolbens 4. Das Magnetfeld 7 durchdringt den Kolben 4 und zieht die Kolbenfeder 5 an das Magnetelement 8 heran, so dass die Kolbenfeder 5 gegen die Innenseite des Bodens 10 gepresst und so in der Montageeinheit 6 festgehalten wird. In diesem Zustand kann die Montageeinheit 6 mit dem Montagewerkzeug 9 in den Hohlraum 15 eingeführt werden.

Nach dem Einführen der Montageeinheit 6 an die vorgesehene Position im Gehäuse 2 wird das Montagewerkzeug 9 vom Kolben 4 getrennt und aus dem Gehäuse 2 hinausgeführt. Zum Trennen des Montagewerkzeugs 9 bei Verwendung eines Permanentmagneten als Magnetelement 8 kann innerhalb der Erfindung beispielsweise ein relativ zum Montagewerkzeug 9 axial versetzbarer Schieber 17 verwendet werden. Durch den Schieber 17 wird der Kolben 4 solange in Position gehalten, während das Montagewerkzeug 9 zurückversetzt wird, biss die Anziehungskraft des Magnetfeldes 7 nicht mehr ausreicht, um den Kolben 4 durch die Anpresskraft der vom Magnetfeld 7 angezogenen Kolbenfeder 5 am Montagewerkzeug 9 festzuhalten. Weitere funktionsäquivalente Methoden sind innerhalb der Erfindung jederzeit zulässig, so kann beispielsweise bei geeigneter Auslegung der Magnetfeldstärke die Klemmkraft der Dichtelemente 18,18' genutzt werden um den Kolben 4 innerhalb des Gehäuses 2 festzuhalten, während das Montagewerkzeug 9 unter Überwindung der Magnetanziehungskraft herausgezogen wird.

In der gezeigten Ausführungsform ist das Magnetelement 8 als ein ringförmiger Permanentmagnet gestaltet, jedoch sind andere Ausführungen innerhalb der Erfindung ebenfalls zulässig.

### Fig.2

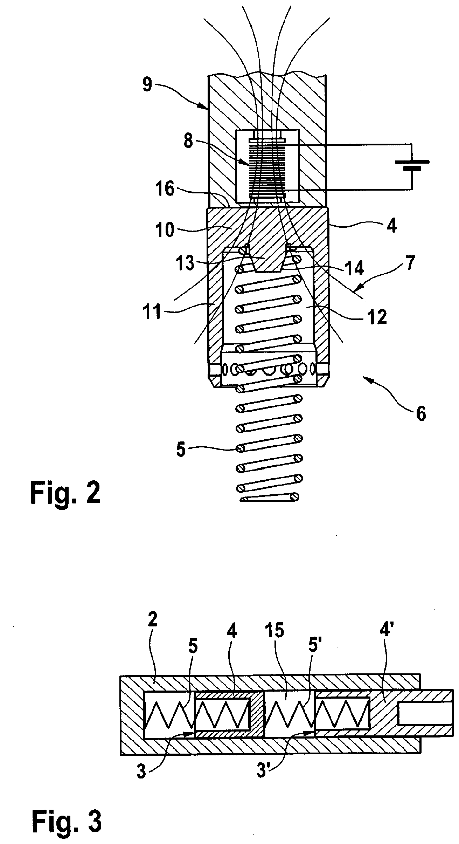

In der Fig.2 ist eine weitere Ausführungsform der Montageeinheit 6 dargestellt. Das Magnetelement 8 ist hier als ein Elektromagnet ausgebildet, dessen Magnetfeld 7 nur in einem aktivierten Zustand vorhanden ist. Beim Einführen der Montageeinheit 6 in den Hohlraum 15 wird das Magnetelement 8 aktiviert und nach dem Erreichen der gewünschten Position für ein einfaches Herausziehen des Montagewerkzeugs 9 deaktiviert.

Im Kolbeninnenraum 12 ist an der Innenseite des Bodens 10 ein in den Kolbeninnenraum 12 vorgestreckter Ansatz 13 vorgesehen. Der Ansatz 12 weist einen konischen Außenkonturabschnitt 14, an dem die Kolbenfeder 5 beim Einführen abgleiten kann und so einfach und zwangszentriert sowie koaxial zum Kolben 4 ausgerichtet wird. Um ein Verklemmen und/ oder Verkanten der Kolbenfeder 5 zu vermeiden ist zwischen der Kolbenfeder 5 und dem Ansatz 12 mindestens eine Spielpassung vorgesehen.

### Fig.3

In der Fig.3 ist zur Verdeutlichung stark vereinfacht das Prinzip eines Hauptbremszylinders in Tandembauweise dargestellt.

Im Hohlraum 15 des Gehäuses 2 sind ein erster Kolben 4 mit der zugeordneten ersten Kolbenfeder 5 und ein zweiter Kolben 4' mit der zugeordneten zweiten Kolbenfeder 5' koaxial hintereinander angeordnet.

Innerhalb der Erfindung ist es zulässig lediglich eine der Montageeinheiten oder alle beiden gemäß der vorstehenden Beschreibung zu gestalten und zu montieren.

### Bezugszeichenliste

- 1: Aggregat
- 2: Gehäuse
- 3: Bohrung
- 4: Kolben
- 5: Kolbenfeder
- 6: Montageeinheit
- 7: Magnetfeld
- 8: Magnetelement
- 9: Montagewerkzeug
- 10: Boden
- 11: Wandung
- 12: Kolbeninnenraum
- 13: Ansatz
- 14: Außenkonturabschnitt
- 15: Hohlraum
- 16: Schnittstelle
- 17: Schieber
- 18: Dichtelement

## Patentansprüche

1. Verfahren zur Montage eines Kolbens (4) mit einer bei Betätigung des Kolbens (4) komprimierbaren, dem Kolben (4) zugeordneten Kolbenfeder (5) in einen Hohlraum (15) eines Aggregats (1) einer hydraulischen Kraftfahrzeugbremsanlage, wobei der Hohlraum (15) in einem Gehäuse (2) des Aggregats (1) angeordnet und zumindest bereichsweise als eine Bohrung (3) zur Aufnahme des Kolbens (4) ausgebildet ist, wobei die Kolbenfeder (5) aus einem magnetischen oder magnetisierbaren Werkstoff, insbesondere einem ferromagnetischen Werkstoff ausgebildet ist und der Kolben (4) aus einem nichtmagnetischen Werkstoff ausgebildet ist, umfassend folgende Prozessschritte:
• Bilden einer Montageeinheit (6) umfassend ein Montagewerkzeug (9) mit einem durch ein Magnetelement (8) erzeugbaren Magnetfeld (7), den Kolben (4) und die Kolbenfeder (5), indem der Kolben (4) zusammen mit einer räumlich zu diesem definiert ausgerichteten Kolbenfeder (5) in das Magnetfeld (7) des Montagewerkzeugs (9) an eine vorgesehene Schnittstelle (16) am Montagewerkzeug (9) gebracht wird, so dass die Kolbenfeder (5) in der Montageeinheit (6) durch das Magnetfeld (7) an dem Kolben (4) gehalten wird,
• Einführen der Montageeinheit (6) in den Hohlraum (15) des Aggregats (1),
• Trennen des Montagewerkzeugs (9) von dem Kolben (4) und Entfernen des Montagewerkzeugs (9) aus dem Aggregat (1).

2. Montagewerkzeug (9) zur Montage der Montageeinheit (6) gemäß dem Verfahren nach Anspruch 1 **dadurch gekennzeichnet, dass** das Magnetelement (8) im Bereich der Schnittstelle (16) zum berührenden Anbinden des Kolbens (4) an das Montagewerkzeug (9) angeordnet ist.

3. Montagewerkzeug (9) nach Anspruch 2 **dadurch gekennzeichnet, dass** das Magnetelement (8) als ein Elektromagnet ausgebildet ist, dessen Magnetfeld (7) wahlweise aktivierbar und deaktivierbar ist.

4. Montagewerkzeug (9) nach Anspruch 2 **dadurch gekennzeichnet, dass** das Magnetelement (8) als ein Permanentmagnet ausgebildet ist.

5. Montagewerkzeug (9) nach Anspruch 4 **dadurch gekennzeichnet, dass** in dem Montagewerkzeug (9) ein relativ zum Montagewerkzeug (9) axial versetzbarer Schieber (17) angeordnet ist, welcher zum Trennen des Kolbens (4) von dem Montagewerkzeug (9) vorgesehen ist.

6. Montagewerkzeug (9) nach wenigstens einem der Ansprüche 4 oder 5 **dadurch gekennzeichnet, dass** das Magnetelement (8) als ein ringförmiger Permanentmagnet ausgebildet ist.

7. Montagewerkzeug (9) nach Ansprüchen 5 und 6 **dadurch gekennzeichnet, dass der** Schieber (17) das Magnetelement (8) axial durchgreift.

8. Aggregat (1) einer hydraulischen Kraftfahrzeugbremsanlage mit wenigstens einem darin mit dem Verfahren nach Anspruch 1 mit dem Montagewerkzeug (9) nach wenigstens einem der Ansprüche 2 bis 7 montierten Kolben (4) und Kolbenfeder (5) **dadurch gekennzeichnet, dass** der Kolben (4) im Wesentlichen hülsenförmig mit einem Boden (10) und einer rohrförmigen Wandung (11) gestaltet ist, wobei eine Innenseite der Wandung (11) und eine Innenseite des Bodens (10) in dem Kolben (4) einen Kolbeninnenraum (12) begrenzen und die Kolbenfeder (5) zumindest bereichsweise in dem Kolbeninnenraum (12) angeordnet ist.

9. Aggregat (1) nach Anspruch 8 **dadurch gekennzeichnet, dass** die Kolbenfeder (5) bei Montage zum Anpressen gegen die Innenseite des Bodens (10) durch das Magnetfeld (7) vorgesehen ist.

10. Aggregat (1) nach Anspruch 8 oder 9 **dadurch gekennzeichnet, dass** die Kolbenfeder (5) gegenüber dem Kolben (4) eine lose Spielpassung aufweist.

11. Aggregat (1) nach wenigstens einem der Ansprüche 8 bis 10 **dadurch gekennzeichnet, dass** die Kolbenfeder (5) koaxial zu dem Kolben (4) angeordnet ist.

12. Aggregat (1) nach wenigstens einem der Ansprüche 8 bis 11 **dadurch gekennzeichnet, dass** zum Zentrieren der Kolbenfeder (5) an der Innenseite des Bodens (10) ein in den Kolbeninnenraum (12) vorgestreckter Ansatz (13) angeordnet ist, wobei der Ansatz (13) zumindest bereichsweise über einen konischen Außenkonturabschnitt (14) verfügt.

13. Aggregat (1) nach wenigstens einem der Ansprüche 8 bis 12 **dadurch gekennzeichnet, dass** das Aggregat (1) als ein Hauptbremszylinder einer Kraftfahrzeugbremsanlage ausgebildet ist.

14. Aggregat (1) nach Anspruch 13 **dadurch gekennzeichnet, dass** der Hauptbremszylinder in Tandembauweise mit wenigstens zwei koaxial hintereinander angeordneten ersten Kolben (4) mit der zugeordneten ersten Kolbenfeder (5) und zweiten Kolben (4') mit der zugeordneten zweiten Kolbenfeder (5'), wobei zumindest ein Kolben (4,4') mit der zugeordneten Kolbenfeder (5,5') als die Montageeinheit (6) vorgesehen ist.

## Claims

1. Method for assembling a piston (4) having a piston spring (5) which in a cavity (15) of an apparatus (1) of a hydraulic motor vehicle brake system is assigned to the piston (4) and when activating the piston (4) is compressible, wherein the cavity (15) is disposed in a housing (2) of the apparatus (1) and at least in regions is configured as a bore (3) for receiving the piston (4), wherein the piston spring (5) is configured from a magnetic or magnetizable material, in particular a ferromagnetic material, and the piston (4) is configured from a non-magnetic material, said method comprising the following process steps:
- forming an assembly unit (6) comprising an assembly tool (9) having a magnetic field (7), the latter being able to be generated by a magnetic element (8), the piston (4) and the piston spring (5) in that the piston (4), conjointly with a piston spring (5) that is spatially aligned with the latter in a defined manner, is moved into the magnetic field (7) of the assembly tool (9) so as to be at a provided interface (16) on the assembly tool (9) such that the piston spring (5) in the assembly unit (6) is held on the piston (4) by the magnetic field (7) ;
- introducing the assembly unit (6) into the cavity (15) of the apparatus (1);
- separating the assembly tool (9) from the piston (4), and removing the assembly tool (9) from the apparatus (1).

2. Assembly tool (9) for assembling the assembly unit (6) according to the method according to Claim 1, **characterized in that** the magnetic element (8) in the region of the interface (16) is disposed so as to physically link the piston (4) to the assembly tool (9).

3. Assembly tool (9) according to Claim 2, **characterized in that** the magnetic element (8) is configured as an electromagnet of which the magnetic field (7) is able to be selectively activated and deactivated.

4. Assembly tool (9) according to Claim 2, **characterized in that** the magnetic element (8) is configured as a permanent magnet.

5. Assembly tool (9) according to Claim 4, **characterized in that** a slide (17) which is able to be axially offset relative to the assembly tool (9) and is provided for separating the piston (4) from the assembly tool (9) is provided in the assembly tool (9).

6. Assembly tool (9) according to at least one of Claims 4 or 5, **characterized in that** the magnetic element (8) is configured as an annular permanent magnet.

7. Assembly tool (9) according to Claim is 5 and 6, **characterized in that** the slide (17) axially penetrates the magnetic element (8).

8. Apparatus (1) of a hydraulic motor vehicle brake system, having at least one piston (4) and the piston spring (5) assembled therein by the method according to Claim 1, using the assembly tool (9) according to at least one of Claims 2 to 7, **characterized in that** the piston (4) is designed so as to be substantially sleeve-shaped having a base (10) and a tubular wall (11), wherein an internal side of the wall (11) and an internal side of the base (10) in the piston (4) delimit a piston interior space (12), and the piston spring (5) at least in regions is disposed in the piston interior space (12).

9. Apparatus (1) according to Claim 8, **characterized in that** the piston spring (5) during assembling, as a result of the magnetic field (7), is provided for pressing against the internal side of the base (10).

10. Apparatus (1) according to Claim 8 and 9, **characterized in that** the piston spring (5) in relation to the piston (4) has a loose clearance fit.

11. Apparatus (1) according to at least one of Claims 8 to 10, **characterized in that** the piston spring (5) is disposed so as to be coaxial with the piston (4).

12. Apparatus (1) according to at least one of Claims 8 to 11, **characterized in that** an appendage (13) which for centering the piston spring (5) projects into the piston interior space (12) is disposed on the internal side of the base (10), wherein the appendage (13) at least in regions possesses a conical external contour portion (14) .

13. Apparatus (1) according to at least one of Claims 8 to 12, **characterized in that** the apparatus (1) is configured as a master brake cylinder of a motor vehicle brake system.

14. Apparatus (1) according to Claim 13, **characterized in that** the master brake cylinder is provided in a tandem construction having, so as to be disposed coaxially behind one another, at least two first pistons (4) having the assigned first piston spring (5) and second pistons (4') having the assigned second piston spring (5'), wherein at least one piston (4, 4') having the assigned piston spring (5, 5') is provided as the assembly unit (6) .

## Revendications

1. Procédé de montage d'un piston (4) comprenant un ressort de piston (5) compressible lors de l'actionnement du piston (4), associé au piston (4), dans une cavité (15) d'un groupe (1) d'un système de freinage hydraulique de véhicule automobile, la cavité (15) étant agencée dans un carter (2) du groupe (1) et étant configurée au moins par zones sous la forme d'un alésage (3) destiné à recevoir le piston (4), le ressort de piston (5) étant formé en un matériau magnétique ou magnétisable, notamment en un matériau ferromagnétique, et le piston (4) étant formé en un matériau non magnétique, comprenant les étapes de processus suivantes :
- la formation d'une unité de montage (6) comprenant un outil de montage (9) avec un champ magnétique (7) pouvant être généré par un élément magnétique (8), le piston (4) et le ressort de piston (5), en amenant le piston (4) conjointement avec un ressort de piston (5) orienté de manière définie dans l'espace par rapport à celui-ci dans le champ magnétique (7) de l'outil de montage (9) au niveau d'une interface prévue (16) sur l'outil de montage (9), de telle sorte que le ressort de piston (5) est maintenu dans l'unité de montage (6) par le champ magnétique (7) sur le piston (4),
- l'introduction de l'unité de montage (6) dans la cavité (15) du groupe (1),
- la séparation de l'outil de montage (9) du piston (4) et retrait de l'outil de montage (9) du groupe (1).

2. Outil de montage (9) pour le montage de l'unité de montage (6) par le procédé selon la revendication 1, **caractérisé en ce que** l'élément magnétique (8) est agencé dans la zone de l'interface (16) pour la liaison de contact du piston (4) à l'outil de montage (9).

3. Outil de montage (9) selon la revendication 2, **caractérisé en ce que** l'élément magnétique (8) est configuré sous la forme d'un électroaimant dont le champ magnétique (7) peut être activé et désactivé au choix.

4. Outil de montage (9) selon la revendication 2, **caractérisé en ce que** l'élément magnétique (8) est configuré sous la forme d'un aimant permanent.

5. Outil de montage (9) selon la revendication 4, **caractérisé en ce qu'**un coulisseau (17) déplaçable axialement par rapport à l'outil de montage (9) est agencé dans l'outil de montage (9), lequel est prévu pour séparer le piston (4) de l'outil de montage (9).

6. Outil de montage (9) selon au moins l'une quelconque des revendications 4 ou 5, **caractérisé en ce que** l'élément magnétique (8) est configuré sous la forme d'un aimant permanent annulaire.

7. Outil de montage (9) selon les revendications 5 et 6, **caractérisé en ce que** le coulisseau (17) traverse axialement l'élément magnétique (8).

8. Groupe (1) d'un système de freinage hydraulique de véhicule automobile comprenant au moins un piston (4) et un ressort de piston (5) montés dans celui-ci par le procédé selon la revendication 1 avec l'outil de montage (9) selon au moins l'une quelconque des revendications 2 à 7, **caractérisé en ce que** le piston (4) est conçu essentiellement en forme de douille avec un fond (10) et une paroi tubulaire (11), un côté intérieur de la paroi (11) et un côté intérieur du fond (10) délimitant dans le piston (4) un espace intérieur de piston (12) et le ressort de piston (5) étant agencé au moins par zones dans l'espace intérieur de piston (12).

9. Groupe (1) selon la revendication 8, **caractérisé en ce que** le ressort de piston (5) est prévu, lors du montage, pour être pressé contre le côté intérieur du fond (10) par le champ magnétique (7).

10. Groupe (1) selon la revendication 8 ou 9, **caractérisé en ce que** le ressort de piston (5) présente un ajustement avec jeu libre par rapport au piston (4).

11. Groupe (1) selon au moins l'une quelconque des revendications 8 à 10, **caractérisé en ce que** le ressort de piston (5) est agencé coaxialement au piston (4).

12. Groupe (1) selon au moins l'une quelconque des revendications 8 à 11, **caractérisé en ce que,** pour le centrage du ressort de piston (5), un appendice (13) avançant dans l'espace intérieur de piston (12) est agencé sur le côté intérieur du fond (10), l'appendice (13) disposant au moins par zones d'une section de contour extérieur conique (14).

13. Groupe (1) selon au moins l'une quelconque des revendications 8 à 12, **caractérisé en ce que** le groupe (1) est configuré sous la forme d'un cylindre de frein principal d'un système de freinage de véhicule automobile.

14. Groupe (1) selon la revendication 13, **caractérisé en ce que** le cylindre de frein principal est construit en tandem avec au moins deux premiers pistons (4) agencés coaxialement l'un derrière l'autre avec le premier ressort de piston (5) associé et des deuxièmes pistons (4') avec le deuxième ressort de piston (5') associé, au moins un piston (4, 4') avec le ressort de piston (5, 5') associé étant prévu en tant qu'unité de montage (6).
